Europäisches Patentamt

European Patent Office

Office européen des brevets

(11) Publication number: **0 072 871**
A1

## (12) EUROPEAN PATENT APPLICATION

(21) Application number: 81106413.8

(22) Date of filing: 18.08.81

(51) Int. Cl.³: **C 04 B 7/32**
C 04 B 35/66

(43) Date of publication of application:
02.03.83 Bulletin 83/9

(84) Designated Contracting States:
BE DE FR GB IT

(71) Applicant: ASAHI GLASS COMPANY LTD.
No. 1-2, Marunouchi 2-chome
Chiyoda-ku, Tokyo(JP)

(72) Inventor: Kato, Tauzo
2-4-12, Midorigaoka
Takasago-shi Hyogo-ken(JP)

(72) Inventor: Ikuta, Ryozo
3-2-18, Chidori Araicho
Takasago-shi Hyogo-ken(JP)

(72) Inventor: Mimori, Takashi
2-4-10, Midorigaoka
Takasago-shi Hyogo-ken(JP)

(72) Inventor: Fukatsu, Yukio
1-27-5, Umegaoka
Setagaya-ku Tokyo(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 43
D-8000 München 22(DE)

(54) Castable composition for heat resistant product.

(57) A castable composition comprises strontium aluminate as a cement with an ultrafine ceramic powder having a particle size of 0.1μ or less as a hardness improver.

EP 0 072 871 A1

COMPLETE DOCUMENT

## BACKGROUND OF THE INVENTION:

FIELD OF THE INVENTION:

The present invention relates to a castable composition for a heat resistant product.  More particularly, it relates to a castable composition having high strength at high temperature.

DESCRIPTION OF THE PRIOR ART:

Castable compositions have been used as substrates for various furnaces because the application for works is easy and the furnaces can be used a short time after the work.  Recently, the castable compositions have been used for a special lining such as a ceramic lining for products having  complicated  configuration and pipes besides the furnaces.

A conventional castable composition for a refractory product comprises alumina cement as a cement however, the strength of the refractory product at high temperature is not high enough because of a low melting point of the alumina cement (about 1550 - 1600°C).

It has been proposed to reduce an amount of the alumina cement by incorporating a hardness improver for the alumina cement. These improvements impart certain effect but are not satisfactory in the fields of certain usages and certain kinds of aggregates.

## SUMMARY OF THE INVENTION:

It is an object of the present invention to provide a castable composition for a heat resistant product which produces a refractory product having high strength at high temperature which could not be given by the conventional castable compositions.

The foregoing and other objects of the present invention have been attained by providing a castable composition comprising strontium aluminate as a cement with a ultrafine ceramic powder having a particle size of 0,1µ or less as a hardness improver.

## DETAILED DESCRIPTION OF THE PREFERRED EMBODIMENTS:

The castable composition for a heat resistant product of the present invention has been developed to be directly applicable in a heat-treatment for producing a refractory product having a special configuration such as a pipe and to be suitable for the application and also to be effective for a refractory in a furnace.

One of the features of the present invention is to use a strontium aluminate cement which has not been used as a cement for an aggregate.

Another feature of the present invention is to use a ultrafine ceramic powder having a particle size of 0.1µ or less as a hardness improver for the strontium aluminate cement.

The strontium aluminate cement can be $SrO.Al_2O_3$, $SrO.2Al_2O_3$ and $SrO.6Al_2O_3$ which have high melting point over the melting point of the alumina cement (calcium monoaluminate) of 1550 - 1600°C.

The inventors have studied the hardening by hydration of strontium aluminate and have found that strontium aluminate can be preferably used as a cement for the cement phase for the aggregate. The present invention has been attained by the finding.

It has been considered that strontium aluminate forms $3SrO.Al_2O_3.6H_2O$, $Al(OH)_3$ and $SrCO_3$ by a hydration to result in the cement function of $3SrO.Al_2O_3.6H_2O$ and $Al(OH)_3$. Thus the casted product having a cement phase of $3SrO.Al_2O_3.6H_2O$ and $Al(OH)_3$ hardened by the hydration discharges crystal water by heating to substantially form the crystalline phase of $SrO.Al_2O_3$, $SrO.2Al_2O_3$ or $SrO.6Al_2O_3$ and the crystalline phase of $SrO$ and $Al_2O_3$ components formed by a reaction of $SrO.Al_2O_3$, $SrO.2Al_2O_3$ or $SrO.6Al_2O_3$ with the aggregate.

It is especially preferable to incorporate a ultrafine ceramic powder having a particle size of $0.1\mu$ or less as a hardness improver together with the formation of a cement phase of strontium aluminate cement. The ultrafine ceramic powder is effective for controlling a hardening time of the strontium aluminate cement especially shortening it and also effective to reduce an amount of the strontium aluminum cement needed to give a desired strength after the hardening of the casted product. The former effect of the ultrafine ceramic powder results in shortening of a demoldable time after pouring the castable composition into a mold. When a product having a complicated configuration is casted, the mold can be reused at high rate and the number of the expensive molds can be reduced.

The latter effect of the ultrafine ceramic powder is especially important in the present invention. An amount of strontium aluminate which is relatively expensive can be reduced and the strength of the refractory product at high temperature can be further increased by reducing the amount of the strontium aluminate placed between the aggregates.

The ultrafine ceramic powder should have a particle size of 0.1μ or less preferably less than 0.05μ to impart the aforementioned effects. The mechanism for the effects of the ultrafine ceramic powder is not fully studied and the reason for the limitation of the particle size is not fully studied. When the particle size of the ultrafine ceramic powder is more than 0.1μ, the effect for improving the hardening of the strontium aluminate is not so remarkable and the effect for reducing the amount of the strontium aluminate needed for a desired strength is not so high. Thus, it is necessary to have 0.1μ or less of a particle size of the ultrafine ceramic powder. An amount of the ultrafine ceramic powder is preferably in a range of 1 to 17 wt.% especially 3.5 to 12 wt.% based on the total of the aggregate and the strontium aluminate cement.

When the amount of the ultrafine ceramic powder is more than 17 wt.%, the increase of the strength resulted by the hardening of the strontium aluminate is adversely affected. When it is less than 1 wt.%, the effect for improving the hardening the strontium aluminate is not remarkable.

An amount of the strontium aluminate is in a range of 0.5 to 10 wt.% especially 2.5 to 10 wt.% base on the total of the aggregate and the strontium aluminate. When the amount of the strontium aluminate is less than 0.5 wt.%, it is not enough to bond the aggregate, and the strength for the product is not high enough. When it is more than 10 wt.%, the strength of the product at room temperature is further increased, however, the strength at high temperature is not further increased.

When the castable composition of the present invention is used for the production of the product, water is added for the hydration of the strontium aluminate. When the amount of water is too small, the hydration of the strontium aluminate is not satisfactory to impart unsatisfactory strength of the refractory product. When it is much, a porosity is high in the drying step to cause high shrinkage in the sintering step. An amount of water is preferably in a range of 3 to 20 wt.% especially 3 to 15 wt.% based on the total of the aggregate, the strontium aluminate and the ultrafine ceramic powder.

The ultrafine ceramic powder and the aggregate used in the present invention will be further illustrated.

The ultrafine ceramic powder is not critical though it has a particle size of $0.1\mu$ or less. It has been found that silica, alumina, chromium oxide, titanium oxide, zirconia and zircon are preferable to impart the effect of the present invention.

The aggregate can be a ceramic powder having a grain size of 1000 to 3000μ in the case of the production of the refractory product and a ceramic powder having a grain size of 100 to 600μ in the case of the production of the fine ceramic product such as a pipe and a roll. The ceramic powder is not critical. It has been found that high melting point oxides such as alumina, zirconia and zircon and silicon carbide and silicon nitride are preferably used.

Various additives can be used for the castable composition. A viscosity improver is preferably added to improve a castability. The viscosity improver can be the conventional ones such as carboxymethyl cellulose and polyvinyl alcohol.

The castable composition has the aforementioned formulation and is casted in a mold having a desired configuration to attain the purpose.

The present invention will be further illustrated by certain examples.

EXAMPLES:

A strontium carbonate powder and an alumina powder at an equal molar ratio were thoroughly mixed and molded by a mechanical press and the product was fired at 1300°C for 5 hours. The fired product was pulverized into a powder having an average particle size of 4.5μ. The fired powder had the components

$SrO.Al_2O_3$, $SrO.2Al_2O_3$ and $SrO.6Al_2O_3$ according to X-ray diffraction.

The resulting strontium aluminate powder and the heat resistant aggregate, the ultrafine ceramic powder and water were mixed at each ratio as shown in Table 1 and each mixture was casted in a metallic mold having a size of 4 cm x 4 cm x 16 cm and hardened it for a time shown in Table 1. Each hardened product was taken out of the mold and each strength of the product at room temperature and high temperature was measured.

The results of the references using the conventional alumina cement are also shown in Table 1.

## Table 1

| Test | 1 | 2 | 3 | 4 | 5 | 6 |
|---|---|---|---|---|---|---|
| **Cement:** | | | | | | |
| Kind | SAO | SAO | SAO | SAO | SAO | SAO |
| Amount (wt.%) | 5 | 9 | 5 | 5 | 2 | 5 |
| **Aggregate:** | | | | | | |
| Kind | SiC | SiC | SiC | SiC | $Al_2O_3$ | $ZrO_2$ |
| Av. part size ($\mu$) | 500 | 500 | 500 | 500 | 500 | 500 |
| Amount (wt.%) | 90 | 86 | 90 | 90 | 93 | 80 |
| **Ultrafine ceramic powder:** | | | | | | |
| Kind | $SiO_2$ | $Al_2O_3$ | $Cr_2O_3$ | $TiO_2$ | $ZrO_2$ | $SiO_2$ |
| Av. part size ($\mu$) | 0.05 | 0.05 | 0.05 | 0.05 | 0.05 | 0.05 |
| Amount (wt.%) | 5 | 5 | 5 | 5 | 5 | 15 |
| Water Amount based on total powders(wt.%) | 5 | 5 | 25 | 2 | 5 | 5 |
| Time for hardening (hr.) | 2 | 2 | 2 | 2 | 2 | 2 |
| Bending strength at room temp. ($kg/cm^2$) | 119 | 131 | 83 | 102 | 23 | 87 |
| Bending strength at 1350°C ($kg/cm^2$) | 362 | 430 | 420 | 410 | 270 | 320 |

Table 1    (cont'd)

| Test | 7 | 8 | 9 | 10 | 11 | 12 |
|---|---|---|---|---|---|---|
| Cement: | | | | | | |
| Kind | SAO | SAO | SAO | SAO | SAO | SAO |
| Amount (wt.%) | 5 | 5 | 5 | 14 | 5 | 7 |
| Aggregate: | | | | | | |
| Kind | Zircon | SiN | MgO | SiC | SiN | Zircon |
| Av. part size (μ) | 500 | 500 | 500 | 500 | 500 | 500 |
| Amount (wt.%) | 90 | 93 | 90 | 81 | 94.5 | 93 |
| Ultrafine ceramic powder: | | | | | | |
| Kind | $SiO_2$ | $Al_2O_3$ | $Al_2O_3$ | $SiO_2$ | $Al_2O_3$ | – |
| Av. part size (μ) | 0.09 | 0.05 | 0.05 | 0.05 | 0.05 | |
| Amount (wt.%) | 5 | 2 | 5 | 5 | 0.5. | |
| Water Amount based on total powders(wt.%) | 5 | 5 | 5 | 5 | 5 | 7.6 |
| Time for hardening (hr.) | 2 | 2 | 1.5 | 2 | 2 | 2 |
| Bending strength at room temp. ($kg/cm^2$) | 78 | 86 | 64 | 135 | 28 | 28 |
| Bending strength at 1350°C ($kg/cm^2$) | 280 | 405 | 320 | 350 | 320 | 270 |

Table 1 (cont'd)

| Test | 13 | 14 | 15 | 16 | 17 |
|---|---|---|---|---|---|
| Cement:<br>Kind<br>Amount (wt.%) | <br>SAO<br>5 | <br>SAO<br>0.1 | <br>SAO<br>5 | <br>CAO<br>5 | <br>CAO<br>5 |
| Aggregate:<br>Kind<br>Av. part size (μ)<br>Amount (wt.%) | <br>SiC<br>500<br>95 | <br>SiC<br>500<br>94.9 | <br>SiN<br>500<br>75 | <br>SiC<br>500<br>95 | <br>SiC<br>500<br>95 |
| Ultrafine ceramic powder:<br>Kind<br>Av. part size (μ)<br>Amount (wt.%) | <br>-<br><br> | <br>$SiO_2$<br>0.05<br>5 | <br>$SiO_2$<br>0.05<br>20 | <br>$SiO_2$<br>0.05<br>5 | <br>-<br>-<br>- |
| Water Amount based on total powders(wt.%) | 6.7 | 5 | 5 | 5 | 5 |
| Time for hardening (hr.) | 2 | 2 | 2 | 2.5 | 2.5 |
| Bending strength at room temp. ($kg/cm^2$) | 27 | 129 | 28 | 115 | 25 |
| Bending strength at 1350°C ($kg/cm^2$) | 290 | 150 | 320 | 240 | 230 |

Note:       SAO:    Strontium aluminate

            CAO:    calcium aluminate

            SiC:    silicon carbide

            SiN:    silicon nitride

            $Cr_2O_3$: chromium oxide

            $TiO_2$:    titanium dioxide

            $SiO_2$:    silica

            $Al_2O_3$:  alumina

            $ZrO_2$:    zirconia

            MgO:    magnesia

CLAIMS:

1) A castable composition for a heat resistant product which comprises strontium aluminate as a cement.

2) The castable composition according to Claim 1 wherein said strontium aluminate is incorporated at a ratio of 0.5 to 10% by weight based on the total of an aggregate and the cement.

3) The castable composition according to Claim 1 wherein strontium aluminate as a cement with an ultrafine ceramic powder having a particle size of 0.1μ or less as a hardness improver is used as a cement for an aggregate.

4) The castable composition according to Claim 3 wherein said strontium aluminate cement is incorporated at a ratio of 0.5 to 10 wt.% based on the total of the cement and the aggregate and said ultrafine ceramic powder having a particle size of 0.1μ or less is incorporated at a ratio of 1 to 17 wt.% base on total of the ultrafine ceramic powder, the aggregate and the strontium aluminate.

5) The castable composition according to Claim 3 which comprises 3 to 20 wt.% of water.

6)     The castable composition according to Claim 3, 4 or 5 wherein said ultrafine ceramic powder is one or more of silica, alumina, chromium oxide, titanium dioxide, zirconia, and zircon.

7)     The castable composition according to Claim 3, 4, 5 or 6 wherein said aggregate is one or more of silicon carbide, silicon nitride, alumina, zirconia and zircon.

European Patent Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | C 04 B 7/32 |
| X/Y | ZEMENT-KALK-GIPS, no. 3, March 1967 WIESBADEN (DE) A. BRANISKI: "Strontiumzemente" pages 96-101 | | 35/66 |
| | * page 100, point IV * | 1,7 | |
| Y | GB - A - 1 166 380 (CARBORUNDUM CO.) | | |
| | * page 2, lines 70-83; page 4, claim 1 * | 1,3,6 | **TECHNICAL FIELDS SEARCHED (Int.Cl. 3)** |
| A | BE - A - 624 003 (HARBISON-WALKER) | | C 04 B 7/00 35/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on. or after the filing date
D: document cited in the application
L: document cited for other reasons
&: member of the same patent family, corresponding document

The present search report has been drawn up for all claims

| Place of search | Date of completion of the search | Examiner |
|---|---|---|
| The Hague | 16-04-1982 | DAELEMAN |

EPO Form 1503.1  06.78